# EUROPEAN PATENT APPLICATION

(11) **EP 4 481 071 A1**
(43) Date of publication of application: **25.12.2024**
(21) Application number: 23907274.7
(22) Date of filing: 09.08.2023
(51) Int. Cl.: C22B 7/00, C22B 26/12, H01M 10/54

(54) **BATTERY SHREDDING SYSTEM AND BATTERY SHREDDING METHOD**

(30) Priority: 20.12.2022 KR 20220179773
(71) Applicant: LG Electronics Inc., Yeongdeungpo-gu Seoul 07336 (KR); Energy Materials Corp., Pohang-si Gyeongsangbuk-do 791941 (KR)
(72) Inventor: LEE, Wonsuk, Seoul 06772 (KR); SHIM, Inyoung, Seoul 06511 (KR); MOON, Yohwan, Seoul 06772 (KR); NAM, Heejeong, Seoul 06772 (KR); LEE, Seunggun, Seoul 06772 (KR); KIM, Geonwoo, Seoul 06772 (KR); KIM, Jongil, Changwon-si, Gyeongsangnam-do 51213 (KR); LEE, Myungwon, Changwon-si, Gyeongsangnam-do 51319 (KR); SON, Jaehong, Gyeongju-si, Gyeongsangbuk-do 38020 (KR); SONG, Senghyen, Seongnam-si, Gyeonggi-do 13625 (KR); KIM, Jiho, Daegu 41228 (KR)
(74) Representative: Schornack, Oliver
(86) International application number: PCT/KR2023/011713
(87) International publication number: WO 2024/135983

(57) **Abstract**

The present specification relates to an embodiment of a battery shredding system and a battery shredding method that cools an object with a coolant in response to a state condition of the object, shreds the cooled material into flake shapes, and mixes or combines the shredded material with a stabilizer in response to the state condition.

## Description

### Technical Field

An embodiment of the present specification relates to a battery shredding system and a battery shredding method of shredding waste batteries.

### Background Art

A background technology of the present disclosure relates to a process of shredding waste batteries in order to recycle the waste batteries.

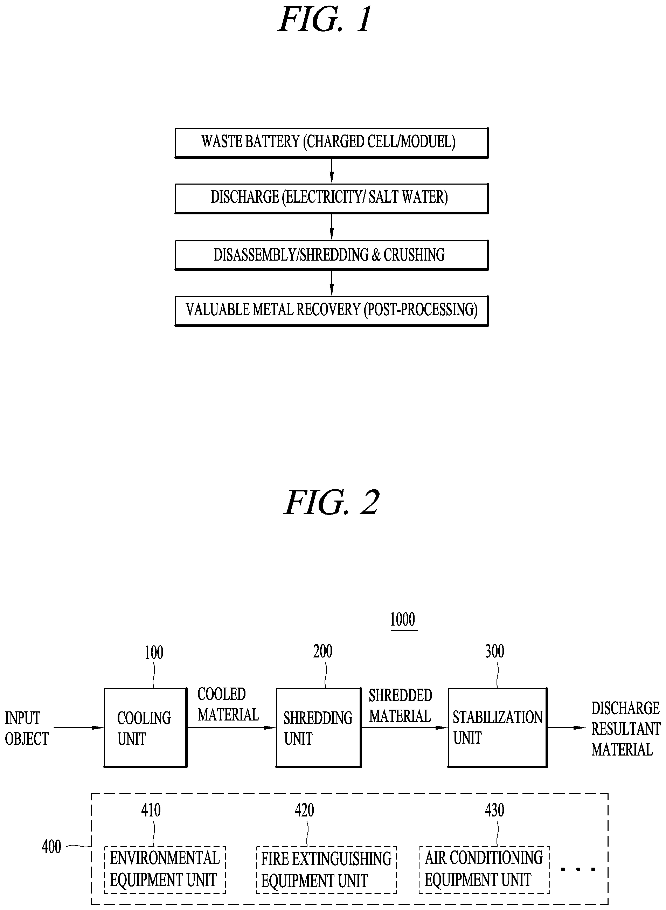

In order to efficiently recycle valuable metals from waste batteries, waste batteries are shredded into flake shapes or powder shapes through preprocessing. FIG. 1 is a flowchart showing a sequence of a waste battery shredding process in the related art, wherein in the related art, as shown in FIG. 1, discharge (salt water/electricity) is carried out on waste charged batteries in advance to prevent a fire and/or an explosion during shredding.

Such a discharge process is carried out using a method of immersing an object to be shredded in salt water, but there is a problem of excessive investment and maintenance costs due to the requirement of a water tank for immersion. In addition, it takes about 2 hours for 3 [lbs] and about 8 hours for 570 [lbs] to be fully discharged, so there is a limitation in that its entire shredding process requires a long time. Moreover, single-cell batteries have structural limitations in immersion, which may lead to improper discharge, and there are concerns that the stability and reliability of the discharge process and its subsequent processes may be limited depending on the shapes of the batteries and/or whether they are activated or not.

### Disclosure of Invention

### Technical Problem

An aspect of the present disclosure is to improve the limitations of the related art as described above.

Accordingly, the present specification aims to provide an embodiment capable of shredding batteries without performing a discharge process.

In addition, the present specification aims to provide an embodiment capable of shredding batteries regardless of the shapes of the batteries and whether they are activated or not.

Moreover, the present specification aims to provide an embodiment capable of stably shredding batteries.

Besides, the present specification aims to provide an embodiment capable of reducing a period of time consumed in the shredding of batteries.

### Solution to Problem

In order to solve the foregoing problems, an aspect of the present disclosure is to shred batteries by replacing a discharge process with a cooling process and a stabilization process.

Specifically, an object to be shredded is cooled with a coolant according to a state condition of the object to suppress the occurrence of a fire, and the shredded object is stabilized with a stabilizer to suppress reactivity, thereby shredding batteries without a separate discharge process.

In other words, the present disclosure has a technical feature of cooling an object with a coolant in response to a state condition of the object, shredding the cooled material into flake shapes, and mixing or combining the shredded material with a stabilizer in response to the state condition, thereby solving the foregoing problems.

The above technical features may be applicable to a battery shredding device, a battery shredding process system, a battery shredding process method, a waste battery recycling system, and a waste battery shredding method, and an aspect of the present specification is to provide an embodiment of a battery shredding system and a battery shredding method using the above technical features as means for solving the problems.

An embodiment of the battery shredding system using the above technical features as means for solving the problems includes a cooling unit that allows an object including one or more batteries to be shredded to be placed therein to perform a cooling process on the object in response to a state condition for one or more of a type, a specification, and an input amount of the object using a liquefacient in which an inert gas is liquefied, a shredding unit that performs a shredding process on the cooled material in the cooling unit, and a stabilization unit that mixes or combines the shredded material in the shredding unit with a stabilizer in response to the state condition to perform a stabilization process on the shredded material.

That is, in the embodiment of the battery shredding system, the cooling unit that allows an object including one or more batteries to be shredded to be placed therein to cool the object with a coolant in which an inert gas is liquefied in response to the state condition of the object, the shredding unit shreds the cooled material in the cooling unit into flake shapes, and the stabilization unit mixes or combines the shredded material shredded in the shredding unit with a stabilizer in response to the state condition.

According to an embodiment of the battery shredding system, a battery shredding process or a battery shredding method including the steps of cooling a placed object with a coolant in which an inert gas is liquefied in response to a state condition, shredding the cooled material into flake shapes, and mixing or combining the shredded material with a stabilizer in response to the state condition to stabilize the reactivity of the shredded material to a predetermined reference level may be applied to shred batteries.

In one embodiment, the state condition may be a condition for one or more of a type, a specification, and an input amount of the object.

In one embodiment, the inert gas may be any one of N2, Ar, and He.

In one embodiment, the coolant may be a liquefacient in which any one of inert gases N2, Ar, and He is liquefied.

In one embodiment, the cooling unit may cool the object with one or more coolants from among a plurality of different types of coolants in response to the state condition.

That is, the cooling process may be a process of cooling the object with one or more coolants from among a plurality of different types of coolants in response to the state condition.

In addition, the cooling unit may perform the cooling process by cooling the object with one or more coolants from among a plurality of different types of coolants in response to the state condition.

In one embodiment, the cooling unit may cool, in response to the state condition, the object with one of more of a first coolant in which N2 gas is liquefied, a second coolant in which Ar gas is liquefied, and a third coolant in which He gas is liquefied.

That is, the cooling process is a process of cooling the object with one or more of a first coolant in which N2 gas is liquefied, a second coolant in which Ar gas is liquefied, and a third coolant in which He gas is liquefied, in response to the state condition.

In addition, the cooling unit may perform the cooling process by cooling the object with one or more of a first coolant in which N2 gas is liquefied, a second coolant in which Ar gas is liquefied, and a third coolant in which He gas is liquefied, in response to the state condition.

In one embodiment, the cooling unit may cool, in response to the state condition, the object with one of more of a direct immersion method of immersing the object in the coolant, an indirect cooling method of indirectly cooling the object with the coolant, and a spray spraying method of spraying the coolant onto the object.

That is, the cooling process may be a process of cooling, in response to the state condition, the object with one of more of a method of immersing the object in the coolant, a method of indirectly cooling the object with the coolant, and a method of spraying the coolant onto the object.

In addition, the cooling unit may perform, in response to the state condition, the cooling process by cooling the object with one of more of a direct immersion method of immersing the object in the coolant, an indirect cooling method of indirectly cooling the object with the coolant, and a spray spraying method of spraying the coolant onto the object.

In one embodiment, the cooling unit may cool the object with a cooling time period corresponding to the state condition.

That is, the cooling process may be a process of cooling the object with a cooling time period corresponding to the state condition.

In addition, the cooling unit may perform the cooling process by cooling the object with a cooling time period corresponding to the state condition.

In one embodiment, the cooling unit may cool the object by measuring a temperature of the object during cooling to adjust the cooling time period of the object according to a result of the measurement.

That is, the cooling process may be a process of measuring a temperature of the object during cooling to cool the object by adjusting a cooling time period of the object according to a result of the measurement.

In addition, the cooling unit may perform the cooling process by measuring a temperature of the object during cooling to cool the object by adjusting a cooling time period of the object according to a result of the measurement.

In one embodiment, the cooling unit may cool the object using the coolant by the amount of coolant used corresponding to the state condition.

That is, the cooling process may be a process of cooling the object using the coolant by the amount of coolant used corresponding to the state condition.

In addition, the cooling unit may perform the cooling process by cooling the object using the coolant by the amount of coolant used corresponding to the state condition.

In one embodiment, the cooling unit may punch the object at least once to cool the object.

That is, the cooling process may be a process of punching the object at least once to cool the object.

In addition, the cooling unit may perform the cooling process by punching the object at least once to cool the object.

In one embodiment, the cooling unit may cool the object to allow the temperature of the object to be below a predetermined temperature.

That is, the cooling process may be a process of cooling the object to allow the temperature of the object to be below a predetermined temperature.

In addition, the cooling unit may perform the cooling process by cooling the object to allow the temperature of the object to be below a predetermined temperature.

In one embodiment, the shredding unit may shred the cooled material into flake shapes less than a predetermined thickness.

That is, the shredding process may be a process of shredding the cooled material into flake shapes less than a predetermined thickness.

In addition, the shredding unit may perform the shredding processing by shredding the cooled material into flake shapes less than a predetermined thickness.

In one embodiment, the shredding unit may shred the cooled material through a plurality of shredding processes.

That is, the shredding process may be a process of shredding the cooled material through a plurality of shredding processes.

In addition, the shredding unit may perform the shredding process by shredding the cooled material through a plurality of shredding processes.

In one embodiment, the shredding unit may shred the cooled material step by step.

That is, the shredding process may be a process of shredding the cooled material step by step.

In addition, the shredding unit may perform the shredding process by shredding the cooled material step by step.

In one embodiment, the stabilizer may be either one of a liquefacient that is mixed or not mixed with an H2O component and a compatibilizer that reacts with the shredded material.

In one embodiment, the stabilization unit may mix or combine one or more stabilizers from among a plurality of different types of stabilizers with the shredded material in response to the state condition.

That is, the stabilization process may be a process of mixing or combining one or more stabilizers from among a plurality of different types of stabilizers with the shredded material in response to the state condition.

In addition, the stabilization unit may perform the stabilization process by mixing or combining one or more stabilizers from among a plurality of different types of stabilizers with the shredded material in response to the state condition.

In one embodiment, the stabilization unit may mix or combine, in response to the state condition, the shredded material with one of more of a first stabilizer that is mixed with an H2O component, a second stabilizer that is not mixed with the H2O component, and a third stabilizer that reacts with the shredded material.

That is, the stabilization process may be a process of mixing or combining, in response to the state condition, the shredded material with one of more of a first stabilizer that is mixed with an H2O component, a second stabilizer that is not mixed with the H2O component, and a third stabilizer that reacts with the shredded material.

In addition, the stabilization unit perform the stabilization process by mixing or combining, in response to the state condition, the shredded material with one of more of a first stabilizer that is mixed with an H2O component, a second stabilizer that is not mixed with the H2O component, and a third stabilizer that reacts with the shredded material.

In one embodiment, the stabilization unit may spray the stabilizer onto the shredded material with a particle size below a predetermined diameter.

That is, the stabilization process may be a process of spraying the stabilizer to the shredded material with a particle size below a predetermined diameter.

In addition, the stabilization unit may perform the stabilization process by spraying the stabilizer to the shredded material with a particle size below a predetermined diameter.

In one embodiment, the stabilization unit may be configured with a rotating body that accommodates the shredded material to rotate in response to the state condition so as to stir the shredded material and the stabilizer.

That is, the stabilization process may be a process of stirring, by a rotating body that accommodates the shredded material, the shredded material and the stabilizer while rotating in response to the state condition.

In addition, the stabilization unit may perform the stabilization process by stirring, by a rotating body that accommodates the shredded material, the shredded material and the stabilizer while rotating in response to the state condition.

In one embodiment, the stabilization unit may measure the temperature while mixing or combining the shredded material and the stabilizer to adjust a mixing or combining time period of the shredded material and the stabilizer according to a result of the measurement, and mix or combine the shredded material and the stabilizer.

That is, the stabilization process may be a process of measuring the temperature while mixing or combining the shredded material and the stabilizer to adjust a mixing or combining time period of the shredded material and the stabilizer according to a result of the measurement, and mixing or combining the shredded material and the stabilizer.

In addition, the stabilization unit may perform the stabilization process by measuring the temperature while mixing or combining the shredded material and the stabilizer to adjust a mixing or combining time period of the shredded material and the stabilizer according to a result of the measurement, and mixing or combining the shredded material and the stabilizer.

In one embodiment, the stabilization unit may measure the temperature while mixing or combining the shredded material and the stabilizer to adjust a temperature of the shredded material according to a result of the measurement.

That is, the stabilization process may be a process of measuring the temperature while mixing or combining the shredded material and the stabilizer to adjust a temperature of the shredded material according to a result of the measurement, and mixing or combining the shredded material and the stabilizer.

In addition, the stabilization unit may perform the stabilization process by measuring the temperature while mixing or combining the shredded material and the stabilizer to adjust a temperature of the shredded material according to a result of the measurement, and mixing or combining the shredded material and the stabilizer.

In one embodiment, the stabilization unit may mix or combine the shredded material and the stabilizer by the amount of stabilizer used corresponding to the state condition.

That is, the stabilization process may be a process of mixing or combining the shredded material and the stabilizer by the amount of stabilizer used corresponding to the state condition.

In addition, the stabilization unit may perform the stabilization process by mixing or combining the shredded material and the stabilizer by the amount of stabilizer used corresponding to the state condition.

Meanwhile, an embodiment of a battery shredding method using the above technical features as means for solving the problems may include the steps of cooling a placed object with a coolant in which an inert gas is liquefied in response to a state condition thereof, shredding the cooled material into flake shapes, and mixing or combining the shredded material with a stabilizer in response to the state condition to stabilize the reactivity of the shredded material to a predetermined reference level.

This embodiment of the battery shredding method may be applied and implemented to the embodiment of the battery shredding system, and may also be implemented independently from the embodiment of the battery shredding system.

In one embodiment, the state condition may be a condition for one or more of a type, a specification, and an input amount of the object.

In one embodiment, the inert gas may be any one of N2, Ar, and He.

In one embodiment, the coolant may be a liquefacient in which any one of inert gases N2, Ar, and He is liquefied.

In one embodiment, the cooling step may cool the object with one or more coolants from among a plurality of different types of coolants in response to the state condition.

In one embodiment, the cooling unit may cool, in response to the state condition, the object with one of more of a first coolant in which N2 gas is liquefied, a second coolant in which Ar gas is liquefied, and a third coolant in which He gas is liquefied.

In one embodiment, the cooling unit may cool, in response to the state condition, the object with one of more of a direct immersion method of immersing the object in the coolant, an indirect cooling method of indirectly cooling the object with the coolant, and a spray spraying method of spraying the coolant onto the object.

In one embodiment, the cooling unit may cool the object with a cooling time period corresponding to the state condition.

In one embodiment, the cooling unit may cool the object by measuring a temperature of the object during cooling to adjust the cooling time period of the object according to a result of the measurement.

In one embodiment, the cooling unit may cool the object using the coolant by the amount of coolant used corresponding to the state condition.

In one embodiment, the cooling unit may punch the object at least once to cool the object.

In one embodiment, the cooling unit may cool the object to allow the temperature of the object to be below a predetermined temperature.

In one embodiment, the shredding unit may shred the cooled material into flake shapes less than a predetermined thickness.

In one embodiment, the shredding unit may shred the cooled material through a plurality of shredding processes.

In one embodiment, the shredding unit may shred the cooled material step by step.

In one embodiment, the stabilizer may be either one of a liquefacient that is mixed or not mixed with an H2O component and a compatibilizer that reacts with the shredded material.

In one embodiment, the stabilizing step may include mixing or combining one or more stabilizers from among a plurality of different types of stabilizers with the shredded material in response to the state condition.

In one embodiment, the stabilizing step may mix or combine, in response to the state condition, the shredded material with one of more of a first stabilizer that is mixed with an H2O component, a second stabilizer that is not mixed with the H2O component, and a third stabilizer that reacts with the shredded material.

In one embodiment, the stabilizing step may spray the stabilizer onto the shredded material with a particle size below a predetermined diameter.

In one embodiment, the stabilization step may allow a rotating body that accommodates the shredded material to rotate in response to the state condition so as to stir the shredded material and the stabilizer.

In one embodiment, the stabilizing step may measure the temperature while mixing or combining the shredded material and the stabilizer to adjust a mixing or combining time period of the shredded material and the stabilizer according to a result of the measurement, and mix or combine the shredded material and the stabilizer.

In one embodiment, the stabilizing step may measure the temperature while mixing or combining the shredded material and the stabilizer to adjust a temperature of the shredded material according to a result of the measurement.

In one embodiment, the stabilizing step may mix or combine the shredded material and the stabilizer by the amount of stabilizer used corresponding to the state condition.

Embodiments of the foregoing battery shredding system and battery shredding method are not limited to the foregoing descriptions, and may include embodiments that are described in the detailed description below or that can be inferred and/or derived from the detailed description.

### Advantageous Effects of Invention

According to embodiments of the foregoing battery shredding system and battery shredding method, the temperature and reactivity of an object may be suppressed through cooling and stabilization processes, thereby having an effect of carrying out a battery shredding process without a discharge process.

Accordingly, the possibility of a fire and an explosion of the object may be suppressed through the cooling and stabilization processes, thereby having an effect of stably shredding the battery without a discharge process.

In addition, the discharge process may be omitted, thereby having an effect of saving the cost and time required to build equipment for a discharge process.

Furthermore, waste water and waste materials generated during the discharge process may not be generated, thereby having an effect of increasing environmental friendliness.

Moreover, a time period consumed in the discharge process may be reduced, thereby having an effect of decreasing a time period consumed in an entire process as well as increasing an amount of shredding.

The effects according to embodiments of the foregoing battery shredding system and battery shredding method are not limited to the foregoing descriptions, and may also include effects that are described in the detailed description below or that can be inferred and/or derived from the detailed description.

### Brief Description of Drawings

FIG. 1 is a flowchart of a waste battery shredding process in the related art.
FIG. 2 is a configuration diagram of a battery shredding system according to an embodiment.
FIG. 3 is a specific exemplary diagram of the battery shredding system shown in FIG. 3.
FIG. 4 is a flowchart showing a battery shredding method according to an embodiment.
FIG. 5 is a block diagram showing a specific process of a battery shredding system and a battery shredding method according to an embodiment.

### Mode for the Invention

In describing the present disclosure, the detailed description will be omitted when a specific description for publicly known technologies to which the invention pertains is judged to obscure the gist of the present disclosure.

Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure.

Hereinafter, a battery shredding system (hereinafter referred to as a shredding system) and a battery shredding method (hereinafter referred to as a shredding method) according to an embodiment will be described with reference to FIGS. 2 to 5.

The shredding system refers to a system of shredding waste batteries into a recyclable state for recycling waste batteries.

That is, the shredding system may be a process system that shreds batteries.

As shown in FIG. 2, the shredding system 1000 includes a cooling unit 100 that performs a cooling process, a shredding unit 200 that performs a shredding process, and a stabilization unit 300 that performs a stabilization process.

In the shredding system 1000, the cooling unit 100 allows an object including one or more batteries to be shredded to be placed therein to cool the object with a coolant in which an inert gas is liquefied in response to a state condition of the object, the shredding unit 200 shreds the cooled material cooled in the cooling unit 100 into flake shapes, and the stabilization unit 300 mixes or combines the shredded material shredded in the shredding unit 200 with a stabilizer in response to the state condition to shred the batteries corresponding to the object.

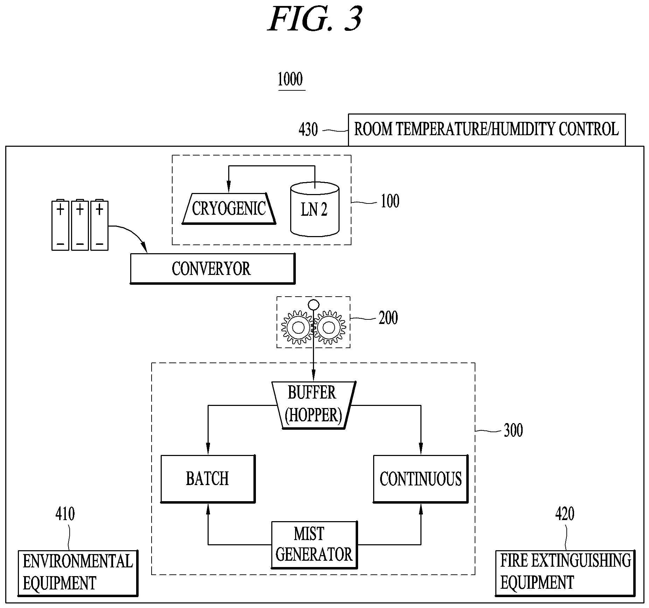

As such, a specific example of the shredding system 1000 including the cooling unit 100, the shredding unit 200, and the stabilization unit 300 may be as shown in FIG. 3.

The shredding system 1000 as shown in FIG. 3, which is an example in which the shredding system 1000 is implemented in one zone (room), shows an exemplary form of a dedicated process room in which the cooling unit 100, the shredding unit 200, the stabilization unit 300, and additional equipment are provided in one space.

Meanwhile, in the shredding system 1000, unlike the example shown in FIG. 3, one or more of the cooling unit 100, the shredding unit 200, and the stabilization unit 300 may be provided in different rooms, or may also be implemented in a form implemented in a plurality of zones.

In addition, the shredding system 1000 may be implemented as a single battery shredding apparatus including the cooling unit 100, the shredding unit 200, and the stabilization unit 300.

As shown in FIGS. 2 and 3, the shredding system 1000 may further include an equipment unit 400 for the cooling process, the shredding process, and the stabilization process.

The equipment unit 400 may include one or more of an environmental equipment unit 410, a fire extinguishing equipment unit 420, and an air conditioning equipment unit 430.

The environmental equipment unit 410 may refer to equipment that ventilates harmful substances and gases generated in a zone where the shredding system 1000 is implemented.

The fire extinguishing equipment unit 420 may refer to equipment for extinguishing a fire occurring in the zone where the shredding system 1000 is implemented.

The air conditioning equipment unit 430 may refer to equipment for adjusting one or more of temperature and humidity in a zone where the shredding system 1000 is implemented.

Each of the environmental equipment unit 410, the fire extinguishing equipment unit 420, and the air conditioning equipment unit 430 may include one or more equipment.

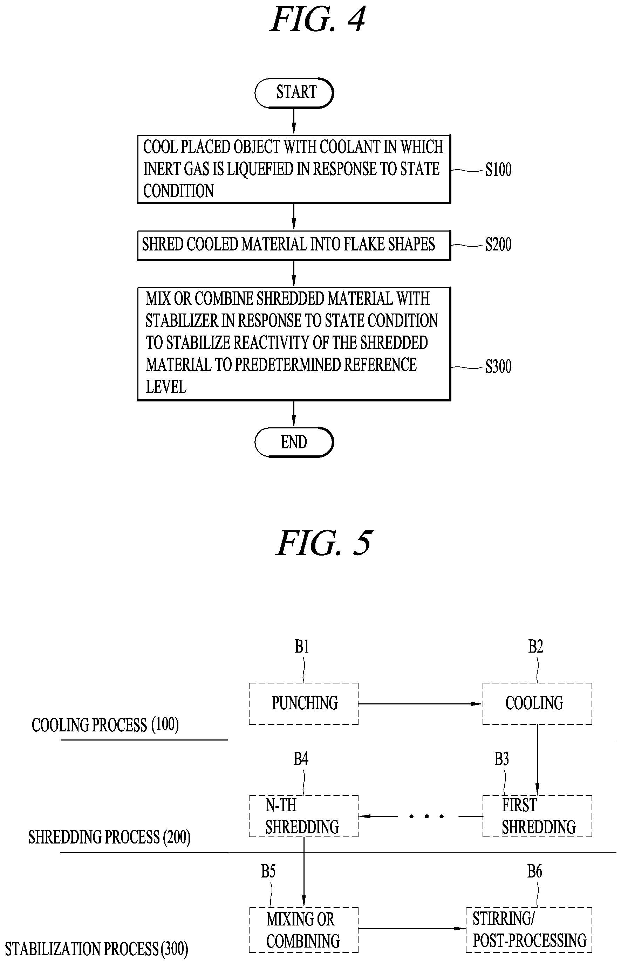

The shredding system 1000 may shred batteries in the same order as the shredding method as shown in FIG. 4.

The shredding method refers to a method of shredding waste batteries into a recyclable state for recycling of waste batteries.

That is, the shredding method may be a method of shredding batteries.

As shown in FIG. 4, the shredding method includes the steps of cooling a placed object with a coolant in which an inert gas is liquefied in response to a state condition of the object (S100), shredding the cooled material into flake shapes (S200), and mixing or combining the shredded material with a stabilizer in response to the state condition to stabilize the reactivity of the shredded material to a predetermined reference level (S300).

That is, the shredding system 1000, similar to the shredding method as shown in FIG. 4, shreds batteries by the steps of cooling a placed object with a coolant in which an inert gas is liquefied in response to a state condition of the object (S100), shredding the cooled material into flake shapes (S200), and mixing or combining the shredded material with a stabilizer in response to the state condition to stabilize the reactivity of the shredded material to a predetermined reference level (S300).

Here, the cooling step S100 is performed by the cooling unit 100, the shredding step S200 is performed by the shredding unit 200, and the stabilizing step S300 is performed by the stabilization unit 300.

That is, the shredding system 1000 and the shredding method shred the battery in the order of cooling process S100 - shredding process S200 - stabilization process S300.

In the shredding system 1000, the cooling unit 100 performs the cooling step S100, that is, the cooling process.

The cooling unit 100 may be configured to accommodate the object to cool the object.

The cooling unit 100 may include one or more devices for performing the cooling process.

For example, the cooling unit 100 may include one or more of a storage device that allows the coolant to be stored therein, a temperature sensor that measures a temperature of the object, a weight sensor that measures a weight of the object, a punching device that punches the object, a spray device for spraying the coolant on the object, and a transfer device for cooling the object and then transferring the cooled object to the shredding unit 200.

When the object is placed from the outside, the cooling unit 100 cools the object with the coolant according to the state condition of the object.

The object may include one or more batteries to be shredded.

Here, the batteries to be shredded may include alkaline secondary batteries such as lithium (Li), sodium (Na), and potassium (K).

The secondary battery may be a battery with a cell shape of any one of pouch-type, square-type, cylindrical-type, module-type, and pack-type.

Accordingly, the object may include secondary batteries configured with various cell shapes.

The state condition may be a condition for one or more of a type, a specification, and an input amount of the object.

Accordingly, the cooling unit 100 may cool the object according to a condition for one or more of a type, a specification, and an input amount of the object.

For example, if the condition of the object corresponds to the first condition, then the object may be cooled by a first process, and if the condition of the object corresponds to the second condition, then the object may be cooled by a second process.

The inert gas liquefied with the coolant may be any one of N2 (nitrogen), Ar (argon), and He (helium).

Accordingly, the coolant may be a liquefacient in which any one of inert gases N2, Ar, and He is liquefied.

One or more types of coolants may be pre-stored in the cooling unit 100.

Preferably, two or more types of the coolants may be pre-stored in the cooling unit 100.

The cooling unit 100 may cool the object with one or more coolants from among a plurality of different types of coolants in response to the state condition.

That is, the cooling unit 100 pre-stores a plurality of different types of coolants to perform the cooling process S100 by cooling the object with one or more coolants from among the plurality of coolants in response to the state condition.

For example, if the condition of the object corresponds to a first condition, then the object may be cooled with a first coolant corresponding to the first condition, and if the condition of the object corresponds to a second condition, then the object may be cooled with a second coolant corresponding to the second condition.

Accordingly, the object may be cooled with one or more coolants from among the plurality of coolants according to the state condition.

The cooling unit 100 may cool the object with one or more of a first coolant in which N2 gas is liquefied, a second coolant in which Ar gas is liquefied, and a third coolant in which He gas is liquefied, in response to the state condition.

That is, the cooling unit 100 may pre-store at least one of the first coolant in which N2 gas is liquefied, the second coolant in which Ar gas is liquefied, and the third coolant in which He gas is liquefied to perform the cooling process S100 by cooling the object with one or more of the first coolant to the third coolant according to the state condition.

Accordingly, the object may be cooled with one or more of the first coolant to the third coolant according to the state condition.

The cooling unit 100 may cool, in response to the state condition, the object with one of more of a direct immersion method of immersing the object in the coolant, an indirect cooling method of indirectly cooling the object with the coolant, and a spray spraying method of spraying the coolant onto the object.

That is, the cooling unit 100 may perform the cooling process S100 by cooling the object with one or more of the direct immersion method, the indirect cooling method, and the spraying method according to the state condition.

For example, if the condition of the object corresponds to the first condition, then the object may be cooled by a first method corresponding to the first condition, if the condition of the object corresponds to the second condition, then the object may be cooled by a second method corresponding to the second condition.

Here, each of the first method and the second method may denote a method that combines one or more of the direct immersion method, the indirect cooling method, and the spraying method.

Accordingly, the object may be cooled by a combination of one or more of the direct immersion method, the indirect cooling method, and the spraying method according to the state condition.

The cooling unit 100 may cool the object with a cooling time period corresponding to the state condition.

That is, the cooling unit 100 may cool the object with a cooling time period according to the state condition to perform the cooling process S100.

For example, if the condition of the object corresponds to the first condition, then the object may be cooled for a first time period corresponding to the first condition, if the condition of the object corresponds to the second condition, then the object may be cooled for a second time period corresponding to the second condition.

Accordingly, the object may be cooled by a cooling time period according to the state condition.

Meanwhile, the cooling time period may be preset in any one of [minutes], [hours], [days], and [weeks] for each state condition.

For example, the first condition may be set to x [minutes], and the second condition may be set to y [days].

In this case, if the object corresponds to the first condition, then it may be cooled for x [minutes], and if the object corresponds to the second condition, then it may be cooled for y [days].

The cooling unit 100 may measure a temperature of the object during cooling to cool the object by adjusting a cooling time period of the object according to a result of the measurement.

That is, the cooling unit 100 may perform the cooling process S100 by cooling the object while adjusting the cooling time period of the object according to the temperature during the cooling of the object.

For example, if the temperature of the object is below a reference value, then the cooling time period may be increased, and if the temperature of the object satisfies the reference value, then the cooling time period may be decreased.

Accordingly, the object may be cooled by adjusting the cooling time period according to the temperature during cooling.

The cooling unit 100 may cool the object using the coolant by the amount of coolant used corresponding to the state condition.

That is, the cooling unit 100 may perform the cooling process S100 by cooling the object using the coolant by the amount of coolant used according to the state condition.

For example, if the condition of the object corresponds to a first condition, then the object may be cooled by using the amount of coolant used corresponding to the first condition, and if the condition of the object corresponds to a second condition, then the object may be cooled by using the amount of coolant used corresponding to the second condition.

Accordingly, the object may be cooled by the amount of coolant used according to the state condition.

In this case, the cooling unit 100 may measure a temperature of the object during cooling to cool the object by adjusting the amount of coolant used according to a result of the measurement.

The cooling unit 100 may punch the object at least once to cool the object.

That is, the cooling unit 100 may perform the cooling process S100 by punching the object at least once to cool the object.

Accordingly, the object may be cooled by punching at least once.

In this case, the cooling unit 100 may punch the object at least one of prior to and during the cooling of the object.

By punching and cooling the object in this way, the coolant can penetrate into the interior of the object to perform more efficient cooling.

In this way, the cooling unit 100 that cools the object may cool the object to allow the temperature of the object to be below a predetermined temperature.

That is, the cooling unit 100 may perform the cooling process S100 by cooling the object to allow the temperature of the object to be below the predetermined temperature.

Accordingly, the object may be cooled to below the predetermined temperature.

Here, the predetermined temperature may be preset according to the type of the object.

In this way, the cooling unit 100 may cool the object below the predetermined temperature, thereby limiting the possibility of ignition of the object.

The cooling unit 100 may cool the object, and then transfer the cooled material obtained by cooling the object to the shredding unit 200.

In this case, the cooled material may be transferred from the cooling unit 100 to the shredding unit 200 through a transfer device provided between the cooling unit 100 and the shredding unit 200, such as a conveyor.

In the shredding system 1000, the shredding unit 200 performs the shredding step S200, that is, the shredding process.

The shredding unit 200 may be configured to accommodate the cooled material so as to shred the cooled material.

The shredding unit 200 may include one or more devices for performing the shredding process.

For example, the shredding unit 200 may include one or more of a vision sensor that senses a state of the cooled material, a shredding device that shreds the cooled material, and a transfer device for shredding the cooled material and then transferring the shredded material to the stabilization unit 300.

Here, the shredding device may include one or more of a single/double/four-axis shredder, a hammer mill, and a rotary cutter.

The shredding unit 200 may also further include an input device for allowing one or more of the coolant, cooling by-product, and a deactivator to be placed therein while shredding the cooled material.

When the cooled material is transferred from the cooling unit 100, the shredding unit 200 shreds the cooled material into flake shapes.

The shredding unit 200 may shred the cooled material into flake shapes less than a predetermined thickness.

That is, the shredding unit 200 may shred the cooled material into flake shapes less than a predetermined thickness to perform the shredding process S200.

Accordingly, the cooled material may be shredded into flake shapes less than a predetermined thickness.

Here, the predetermined thickness may be preset as a thickness that allows the recycling of the batteries to be shredded.

For example, the thickness may be set to 1 to 50 [mm].

The shredding unit 200 may shred the cooled material through a plurality of shredding processes.

That is, the shredding unit 200 may shred the cooled material through a plurality of shredding processes to perform the shredding process S200.

For example, subsequent to (primarily) shredding the cooled material, the primarily shredded resultant material may be shredded again (secondarily).

Accordingly, the cooled material may be shredded through a plurality of shredding processes.

The shredding unit 200 may shred the cooled material step by step.

That is, the shredding unit 200 may shred the cooled material step by step to perform the shredding process S200.

For example, the cooled material may be shredded into size "a" during the primary shredding, and the resultant material with a shredded appearance may be shredded into size "b" less than the size "a" during the secondary shredding.

Accordingly, the cooled material may be shredded step by step.

In this case, the shredding unit 200 may be provided with a plurality of shredding devices for shredding the shredded material step by step, and each of the plurality of shredding devices may shred the shredded material in different sizes.

In this way, the shredding unit 200 may shred the cooled material into flake shapes less than the predetermined thickness step by step, thereby allowing the stabilization and recycling of the shredded material from which the object has been shredded.

The shredding unit 200 may shred the cooled material, and then transfer the shredded cooled material to the stabilization unit 300.

In this case, the shredded material may be transferred from the shredding unit 200 to the stabilization unit 300 through a transfer device provided between the shredding unit 200 and the stabilization unit 300, such as a buffer (hopper).

In the shredding system 1000, the stabilization unit 300 performs the stabilizing step S300, that is, the stabilization process.

The stabilization unit 300 may have a structure that accommodates the shredded material to stabilize the shredded material.

The stabilization unit 300 may be made of a thermally conductive material.

The stabilization unit 300 may include one or more devices for performing the stabilization process.

For example, the stabilization unit 300 may include one or more of a storage device in which the stabilizer is stored, a vision sensor that senses the state of the shredded material, a temperature sensor that measures a temperature of the shredded material, a temperature adjustment device that adjusts a temperature of the shredded material, a weight sensor that measures a weight of the shredded material, a spraying device that sprays the stabilizer, and a mixing/combining device that mixes or combines the shredded material with the stabilizer.

Here, the temperature adjustment device may be a device that adjusts the temperature of the shredded material accommodated in the stabilization unit by adjusting the temperature of one or more of the inside and outside of the stabilization unit.

The mixing/combining device may be a rotating body that can rotate while the shredded material is accommodated therein.

The mixing/combining device may include one or more of a batch type device and a rotary type device.

The batch type device may be a combination of one or more of ribbon, plough, tumble, paddle flat, vortex, and spiral, and the rotary type device may be a combination of one or more of screw and pin.

The stabilization unit 300 may also further include an input device for allowing one or more of the coolant, cooling by-product, and a deactivator to be placed therein while stabilizing the shredded material.

The stabilization unit 300 may further include a ventilation device that ventilates an electrolyte solution evaporated during the stabilization of the shredded material.

The stabilization unit 300 may also further include a temperature adjustment device for adjusting the temperature of the shredded material so as to be maintained below a specific temperature.

For example, the stabilization unit 300 may further include a chiller.

When the shredded material is transferred from the shredding unit 200, the stabilization unit 300 mixes or combines the shredded material with the stabilizer according to the state condition.

The stabilization unit 300 may mix or combine the stabilizer with the shredded material to stabilize the reactivity of the shredded material to a predetermined reference level.

Here, the predetermined reference level may be a reactivity reference level that limits the possibility of an explosion of the shredded material.

Accordingly, the stabilization process may denote a process of stabilizing the possibility of an explosion of the shredded material to the predetermined reference level.

The stabilizer may be either one of a liquefacient that is mixed or not mixed with an H2O component is mixed or unmixed and a compatibilizer that reacts with the shredded material.

One or more types of stabilizers may be pre-stored in the stabilization unit 300.

Preferably, two or more types of the stabilizers may be pre-stored in the stabilization unit 300.

That is, the stabilization unit 300 may mix or combine one or more stabilizers from among a plurality of different types of stabilizers with the shredded material in response to the state condition.

That is, the stabilization unit 300 may pre-store a plurality of different types of stabilizers to perform the stabilization process S300 by mixing and combining one or more stabilizers from among the plurality of stabilizers with the shredded material in response to the state condition.

For example, if the condition of the object corresponds to a first condition, then the shredded material may be stabilized by a first stabilizer corresponding to the first condition, and if the condition of the object corresponds to a second condition, then the shredded material may be stabilized by a second stabilizer corresponding to the second condition.

Accordingly, the shredded material may be stabilized by mixing or combining with one or more stabilizers from among the plurality of stabilizers according to the state condition.

The stabilization unit 300 may mix or combine, in response to the state condition, the shredded material with one of more of a first stabilizer that is mixed with an H2O component, a second stabilizer that is not mixed with the H2O component, and a third stabilizer that reacts with the shredded material.

That is, the stabilization unit 300 may pre-store one of more of a first stabilizer that is mixed with an H2O component, a second stabilizer that is not mixed with the H2O component, and a third stabilizer that reacts with the shredded material to perform the stabilization process S300 by mixing or combining one or more of the first to third stabilizers with the shredded material.

Accordingly, the shredded material may be stabilized by mixing or combining with one or more of the first to third stabilizers according to the state condition.

The stabilization unit 300 may spray the stabilizer to the shredded material with a particle size below a predetermined diameter.

That is, the stabilization unit 300 may perform the stabilization process S300 by spraying the stabilizer to the shredded material with a particle size below the predetermined diameter.

Accordingly, the shredded material may be stabilized by spraying the stabilizer with a particle size below the predetermined diameter.

In this case, the stabilization unit 300 may spray the stabilizer to the shredded material in the form of mist with a particle size below the predetermined diameter.

Meanwhile, the stabilizer may be sprayed in the form of mist with a particle size below the predetermined diameter through one or more devices.

For example, the stabilization unit 300 may include one or more devices from among a two-fluid nozzle, an ultrasonic vibrator, a heated mist generator, a natural vaporization mist generator, and an electrode-type mist generator to spray the stabilizer to the shredded material with a particle size below the predetermined diameter through the one or more devices.

Here, the predetermined particle size may denote a maximum particle size at which the stabilizer is sprayed.

For example, the particle size may be set to 1 [nm] to 500 [um].

The stabilization unit 300 may be configured with a rotating body that accommodates the shredded material to rotate in response to the state condition so as to stir the shredded material and the stabilizer.

That is, the stabilization unit 300 may perform the stabilization process S300 while rotating according to the state condition to stir the shredded material and the stabilizer.

Accordingly, the shredded material may be stabilized by stirring the shredded material while the stabilization unit 300 rotates according to the state condition.

In this case, the stabilization unit 300 may stir the shredded material and the stabilizer by rotation in one or more situations, such as prior to mixing or combining the shredded material and the stabilizer, while mixing or combining the shredded material and the stabilizer, and subsequent to mixing or combining the shredded material and the stabilizer.

Here, the stabilization unit 300 may rotate at a speed within a preset speed range to stir the shredded material and the stabilizer.

For example, a speed of 0 to 300 [RPM] may be preset to stir the shredded material and the stabilizer while rotating at a speed within a range of 0 to 300 [RPM].

Additionally, in this case, the stabilization unit 300 may vary the rotation speed to stir the shredded material and the stabilizer.

In this way, the stabilization unit 300 configured with a rotating body may stir the shredded material and the stabilizer through rotation, thereby effectively performing the mixing or combining of the shredded material and the stabilizer.

The stabilization unit 300 may mix or combine the shredded material and the stabilizer during a mixing or combining time period of the shredded material and the stabilizer corresponding to the state condition.

That is, the stabilization unit 300 may stabilize the shredded material during a mixing or combining time period of the shredded material and the stabilizer according to the state condition to perform the stabilization process S300.

For example, if the condition of the object corresponds to a first condition, then the shredded material may be stabilized during a first time period corresponding to the first condition, and if the condition of the object corresponds to a second condition, then the shredded material may be stabilized during a second time period corresponding to the second condition.

Accordingly, the shredded material may be stabilized by the mixing or combining time period according to the state condition.

Meanwhile, the stabilization time period may be preset in any one of [minutes], [hours], [days], and [weeks] for each of the state condition.

For example, the first condition may be set to x [minutes], and the second condition may be set to y [days].

In this case, if the object corresponds to the first condition, then it may be stabilized for x [minutes], and if the object corresponds to the second condition, then it may be stabilized for y [days].

The stabilization unit 300 may measure the temperature while mixing or combining the shredded material and the stabilizer to adjust a mixing or combining time period of the shredded material and the stabilizer according to a result of the measurement, and mix or combine the shredded material and the stabilizer.

That is, the stabilization unit 300 may perform the stabilization process S300 by adjusting a mixing or combining time period of the shredded material and the stabilizer according to the temperature while mixing or combining the shredded material and the stabilizer to mix or combine the shredded material and the stabilizer.

Accordingly, the shredded material may be stabilized by adjusting the mixing or combining time period according to the temperature while mixing or combining with the stabilizer.

The stabilization unit 300 may measure the temperature while mixing or combining the shredded material and the stabilizer to adjust the temperature of the shredded material according to a result of the measurement.

That is, the stabilization unit 300 may perform the stabilization process S300 by adjusting a temperature of the shredded material according to the temperature while mixing or combining the shredded material and the stabilizer to mix or combine the shredded material and the stabilizer.

Accordingly, the shredded material may be stabilized by adjusting a temperature thereof according to the temperature while mixing or combining with the stabilizer.

In this case, the stabilization unit 300 may include a temperature adjustment device to control a temperature of the shredded material through the temperature adjustment device.

In this way, the temperature adjustment device may be included therein to adjust a temperature of the shredded material, thereby decelerating or accelerating the reaction of the shredded material.

The stabilization unit 300 may mix or combine the shredded material and the stabilizer by the amount of stabilizer used corresponding to the state condition.

That is, the stabilization unit 300 may perform the stabilization process S300 by mixing or combining the shredded material and the stabilizer by the amount of stabilizer used according the state condition.

Accordingly, the shredded material may be stabilized by mixing or combining with the stabilizer by the amount of stabilizer used according to the state condition.

The detailed shredding process of the shredding system 1000 as described above may be carried out as shown in FIG. 5.

When the object is placed into the cooling unit 100, the cooling unit 100 may punch the object at least once (B1) to perform the cooling process S100 by cooling the object below the predetermined temperature with the coolant according to the state condition (B2), and transfer the cooled material to the shredding unit 200.

When the cooled material is placed into the shredding unit 200, the shredding unit 200 may perform the shredding process S200 by shredding the cooled material N times, at least once (B3 and B4), and transfer the shredded material to the stabilization unit 300.

When the shredded material is placed into the stabilization unit 300, the stabilization unit 300 may perform the stabilization process S300 by mixing or combining the shredded material with the stabilizer according to the state condition (B5), then stirring and post-processing the shredded material and the stabilizer (B6) to stabilize the reactivity of the shredded material to the predetermined reference level so as to discharge the stabilized resultant material.

The embodiments of the shredding system 1000 and the shredding method have been described so far, but the foregoing embodiments may of course be modified in various ways without departing from the scope of the present disclosure, and the scope of the present disclosure should not be limited to the foregoing embodiments, but should be determined by the claims described below as well as equivalents thereto.

**[Reference Signs List]**

| | | | |
|---|---|---|---|
| 100: | Cooling unit | 200: | Shredding unit |
| 300: | Stabilization unit | 1000: | Battery shredding system |

## Claims

1. A battery shredding system of shredding batteries, the system comprising:
a cooling unit that allows an object including one or more batteries to be shredded to be placed therein to cool the object with a coolant in which an inert gas is liquefied in response to a state condition of the object;
a shredding unit that shreds the cooled material cooled in the cooling unit into flake shapes; and
a stabilization unit that mixes or combines the shredded material shredded in the shredding unit with a stabilizer in response to the state condition.

2. The system of claim 1, wherein the state condition is a condition for one or more of a type, a specification, and an input amount of the object.

3. The system of claim 1, wherein the coolant is a liquefacient in which any one of inert gases N2, Ar, and He is liquefied.

4. The system of claim 1, wherein the cooling unit cools, in response to the state condition, the object with one of more of:
a first coolant in which N2 gas is liquefied;
a second coolant in which Ar gas is liquefied; and
a third coolant in which He gas is liquefied.

5. The system of claim 1, wherein the cooling unit cools, in response to the state condition, the object with one of more of:
a direct immersion method of immersing the object in the coolant;
an indirect cooling method of indirectly cooling the object with the coolant; and
a spray spraying method of spraying the coolant onto the object.

6. The system of claim 1, wherein the cooling unit cools the object with a cooling time period corresponding to the state condition.

7. The system of claim 1, wherein the cooling unit cools the object by measuring a temperature of the object during cooling to adjust the cooling time period of the object according to a result of the measurement.

8. The system of claim 1, wherein the cooling unit cools the object using the coolant by the amount of coolant used corresponding to the state condition.

9. The system of claim 1, wherein the cooling unit punches the object at least once to cool the object.

10. The system of claim 1, wherein the cooling unit cools the object to allow the temperature of the object to be below a predetermined temperature.

11. The system of claim 1, wherein the shredding unit shreds the cooled material into flake shapes less than a predetermined thickness.

12. The system of claim 1, wherein the shredding unit shreds the cooled material through a plurality of shredding processes.

13. The system of claim 1, wherein the shredding unit shreds the cooled material step by step.

14. The system of claim 1, wherein the stabilizer is either one of a liquefacient that is mixed or not mixed with an H2O component and a compatibilizer that reacts with the shredded material.

15. The system of claim 1, wherein the stabilization unit mixes or combines, in response to the state condition, the shredded material with one of more of:
a first stabilizer that is mixed with an H2O component;
a second stabilizer that is not mixed with the H2O component; and
a third stabilizer that reacts with the shredded material.

16. The system of claim 1, wherein the stabilization unit sprays the stabilizer onto the shredded material with a particle size below a predetermined diameter.

17. The system of claim 1, wherein the stabilization unit is configured with a rotating body that accommodates the shredded material to rotate in response to the state condition so as to stir the shredded material and the stabilizer.

18. The system of claim 1, wherein the stabilization unit measures the temperature while mixing or combining the shredded material and the stabilizer to adjust a mixing or combining time period of the shredded material and the stabilizer according to a result of the measurement, and mixes or combines the shredded material and the stabilizer.

19. The system of claim 1, wherein the stabilization unit measures the temperature while mixing or combining the shredded material and the stabilizer to adjust a temperature of the shredded material according to a result of the measurement.

20. The system of claim 1, wherein the stabilization unit mixes or combines the shredded material and the stabilizer by the amount of stabilizer used corresponding to the state condition.

21. A battery shredding method of shredding batteries, the method comprising:
cooling a placed object with a coolant in which an inert gas is liquefied in response to a state condition thereof;
shredding the cooled material into flake shapes; and
mixing or combining the shredded material with a stabilizer in response to the state condition to stabilize the reactivity of the shredded material to a predetermined reference level.
